Europäisches Patentamt

European Patent Office

Office européen des brevets

(11) Numéro de publication: **0 204 645**

**A1**

(12) # DEMANDE DE BREVET EUROPEEN

(21) Numéro de dépôt: **86420142.1**

(22) Date de dépôt: **02.06.86**

(51) Int. Cl.⁴: **F 03 B 15/14**
**F 03 B 15/10**

(30) Priorité: **03.06.85 FR 8508508**

(43) Date de publication de la demande:
**10.12.86 Bulletin 86/50**

(84) Etats contractants désignés:
**AT CH DE FR LI**

(71) Demandeur: **NEYRPIC**
**75 rue du Général Mangin**
**F-38100 Grenoble(FR)**

(72) Inventeur: **Thomas, Philippe**
**Le Petit Montfleury 4, chemin Pajon**
**F-38700 Corenc(FR)**

(74) Mandataire: **Karmin, Roger et al,**
**Cabinet MONNIER 150, cours Lafayette**
**F-69003 Lyon(FR)**

(54) **Procédé de régulation de la puissance des turbines hydrauliques.**

(57) Procédé de régulation de puissance des turbines hydrauliques, consistant à générer une consigne d'ouverture (Ô) du vannage (9) au moyen d'un microprocesseur (12) auquel on applique d'une part un renseignement relatif à la hauteur de chute (H) et d'autre part une consigne de puissance (Po), puis à corriger la consigne d'ouverture (Ô) en fonction de l'écart de fréquence ($\Delta f$).

*Fig. 1*

EP 0 204 645 A1

Pour une turbine hydraulique, le réglage de la charge de son alternateur s'effectue en asservissant l'ouverture du vannage de la turbine à une consigne extérieure qui constitue donc une consigne d'ouverture. Ceci est le cas le plus simple, mais une telle consigne est fréquemment plus complexe, en particulier lorsque l'alternateur débite du courant sur le réseau d'énergie publique. A cet effet, cette consigne est fréquemment transmise à partir d'un poste central mettant en oeuvre les programmes d'un centre des mouvements de l'énergie, pour lequel la consigne est la puissance électrique à fournir au réseau par le groupe considéré et ceci d'autant plus que la puissance installée est importante. La plupart des groupes de production d'énergie électrique sont donc asservis à la puissance électrique de l'alternateur par l'intermédiaire d'un capteur placé aux bornes de celui-ci.

Par cette méthode, on obtient effectivement une bonne précision de la puissance électrique demandée si toutefois la fréquence du réseau est égale à celle de consigne. Cette méthode a pour inconvénient de prendre en compte les perturbations incluses dans une boucle beaucoup plus importante que celle définie par un simple asservissement du vannage.

En effet la configuration du système comporte alors :

La fonction de transfert de la turbine ;

La fonction de transfert de l'alternateur ;

toute perturbation introduite dans cette chaîne est donc prise en compte par le système de régulation et elle est répercutée, voire amplifiée au niveau du vannage.

Ces pertubations entraînent une variation continuelle de celui-ci, de telle sorte qu'on expose le matériel à des fatigues mécaniques importantes pouvant conduire à des usures prématurées des organes constituant le vannage.

On citera ci-après à titre non exhaustif des perturbations agissant sur la turbine et sur l'alternateur et qui sont susceptibles de gêner le fonctionnement normal de la régulation :

. Les instabilités hydrauliques d'écoulement (torche, variation de l'écoulement dans l'aspirateur des turbines) ;

. Instabilité de l'excitation de l'alternateur ;

. Oscillations propres à la tension du stator de l'alternateur dues à l'insuffisance des amortisseurs ;

. Oscillations de torsion de l'arbre du groupe ;

. Oscillations de tension sur le réseau (lignes capacitives) ;

. etc... etc...

Les perfectionnements qui font l'objet de la présente invention visent à remédier à ces inconvénients en supprimant la boucle grâce à laquelle on amène à un comparateur des informations sur la puissance émise par l'alternateur en vue de la comparer à la consigne de puissance.

On a décrit dans le document FR-A-2 542 817 un procédé de commande du fonctionnement de turbines à étapes multiples visant à régler l'ouverture des aubes directrices mobiles en fonction de la hauteur de chute et de la charge désirée. Mais on introduit dans le système de commande desdites aubes un paramètre qui se trouve être la valeur du débit mesuré.

Cette mesure étant délicate et difficile sur un prototype, suivant l'invention on élimine l'utilisation de ce paramètre en ayant recours à la loi composite de l'ouverture qui dans le cas de n'importe quel genre de turbine est fonction de la puissance fournie par l'alternateur et de la hauteur de chute.

En outre le but du procédé suivant le document FR-A-2 542 817 est l'amélioration de la stabilité hydraulique par des ouvertures différentielles de chaque distributeur pour donner une bonne répartition de pression entre les étages.

Le procédé suivant l'invention s'applique aux machines hydrauliques à un étage dont la puissance est maintenue à une valeur affichée.

A cet effet, le procédé suivant l'invention consiste à générer une consigne d'ouverture ($\hat{O}$) du vannage au moyen d'un microprocesseur auquel on applique d'une part un renseignement relatif à la hauteur de chute (H) et d'autre part une consigne de puissance (Po), puis à corriger la consigne d'ouverture ($\hat{O}$) en fonction de l'écart de fréquence ($\Delta f$).

Suivant une disposition avantageuse, le procédé suivant l'invention consiste en outre :

- à faire amener dans un sommateur de consigne les valeurs de la consigne $\hat{O}$ et de son correctif. $\Delta\hat{O}$ pour obtenir la consigne demandée ($\hat{O}_1$) ;

- à comparer la consigne réelle ($\hat{O}_1$) et l'ouverture réelle ($\hat{O}_R$) de la turbine ;

- à amplifier le signal résultant de la comparaison ;

- et à l'appliquer aux organes de réglage du débit de la turbine.

Le dessin annexé, donné à titre d'exemple permettra de mieux comprendre l'invention, les caractéristiques qu'elle présente et les avantages qu'elle est susceptible de procurer :

Fig. 1 est un diagramme montrant les différents éléments permettant la mise en oeuvre du procédé usuel de régulation de la puissance de la turbine.

Fig. 2 est un diagramme des différents éléments permettant de réguler la puissance de la turbine par mise en application du procédé suivant l'invention.

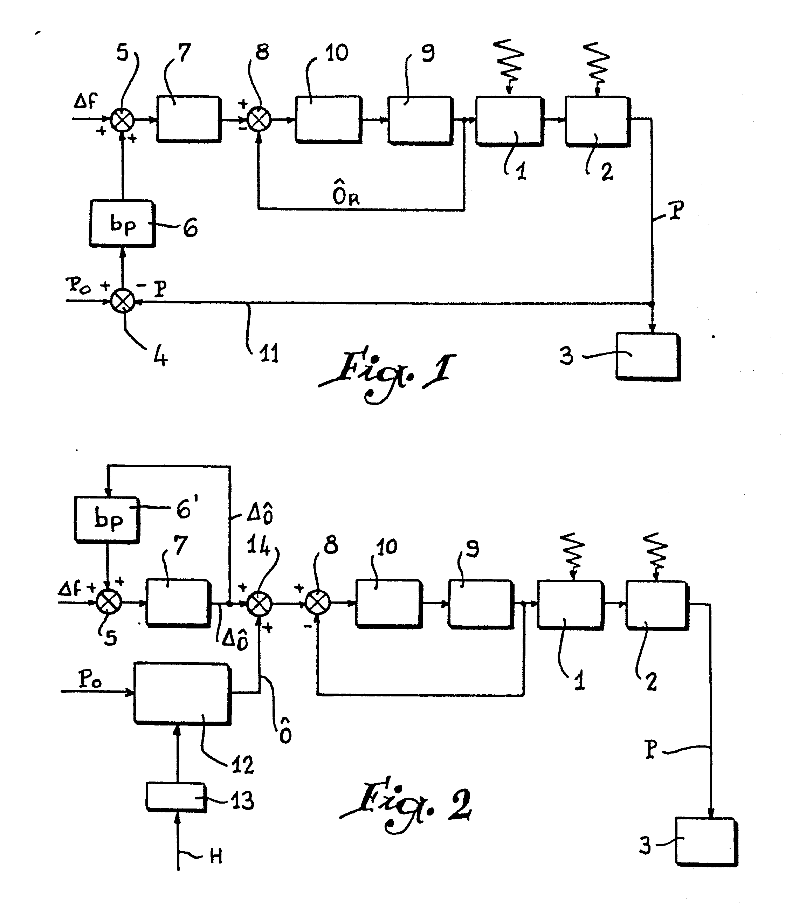

Dans le diagramme de fig. 1, la référence 1 est attribuée à une turbine qui entraîne un alternateur 2 produisant du courant électrique dans un réseau 3. La puissance électrique fournie par l'alternateur a été référencée $\underline{P}$ sur la ligne qui le relie au réseau 3.

La consigne de puissance est comparée avec la puissance de sortie de l'alternateur 2 dans un comparateur 4 qui émet un signal égal à la différence entre P et $P_o$ en direction d'un sommateur 5 qui reçoit en outre une information relative à l'importance de l'écart de fréquence $\Delta f$ entre le courant fourni par l'alternateur et une référence constante 3 à 50 ou 60 HZ. On observe que le signal transite par un système correcteur 6 dont le coefficient de correction $\underline{bp}$ appelé "statisme" dépend de l'exploitation. A la sortie du sommateur 5, l'erreur entre dans un régulateur de vitesse 7 dont la sortie entre dans un comparateur 8. Celui-ci évalue la différence entre le signal d'instruction sortant du régulateur de vitesse 7 et un relevé de l'ouverture réelle du vannage 9 de la turbine 1 et qui a été référencé $\hat{O}_R$. Le comparateur 8 émet un ordre en direction d'un amplificateur 10 agissant sur le vannage 9 pour éventuellement modifier la valeur de ce dernier par rapport à l'ouverture réelle $\hat{O}_R$.

Comme indiqué plus haut, des perturbations peuvent être appliquées à la turbine et/ou à l'alternateur et qui sont prises en compte par le système et parfois même répercutées au niveau du vannage 9. Ceci est évident en constatant la liaison par une boucle importante 11 entre la sortie de l'alternateur et le comparateur 4.

Conformément à l'invention, on supprime la boucle 11, ce qui élimine l'influence des perturbations auxquels sont soumis la turbine 1 et l'alternateur 2, sur le réglage du vannage 9. Mais, bien entendu, il est nécessaire de remplacer l'introduction de la puissance fournie par l'alternateur par une autre grandeur de même nature, mais qui ne soit pas prélevée à la sortie de l'alternateur 2 afin de ne pas être affectée par les perturbations qui peuvent s'appliquer à ce dernier et à la turbine 1.

On sait que la puissance fournie par un alternateur est donnée par la formule générale :

$$P = D_a . D_t . Q . H . \varrho . g .$$

dans laquelle le rendement $D_a$ de l'alternateur en fonction de la charge peut aisément être introduit car il est bien connu.

- Le rendement $D_t$ de la turbine dépend du débit Q et un peu de la hauteur nette de chute H.

- La valeur H peut être mesurée par un capteur approprié donnant la chute brute de telle sorte que la chute nette est aisément déterminable par un calcul simple de pertes de charge dans le conduit d'amenée. Cette information généralement bruitée peut être filtrée sans inconvénient pour la stabilité.

Q est le paramètre principal que détermine la position du vannage 9. Sa relation avec l'ouverture dépend essentiellement du type de turbine, cette relation est une loi composite que l'on peut tirer des courbes issues des essais sur modèle en fonction du point de fonctionnement vis-à-vis de la chute de la vitesse et de l'ouverture.

Pour chaque type de turbine, des lois simples connues permettent de déduire l'ouverture en partant du débit et de la chute à vitesse constante.

Cette loi est de la forme :

$$\hat{O} = f. \ (P.H)$$

puisque la puissance fournie par l'alternateur est fonction du débit Q, comme indiqué dans l'égalité citée plus haut. Elle peut être approximée relativement simplement à l'aide d'un circuit analogique performant du commerce ou plus aisément à l'aide d'un micro processeur 12 (fig. 2) qui reçoit le renseignement H relatif à la chute nette après filtrage dans un filtre 13, d'une part, et d'autre part la consigne de puissance Po. Le micro-processeur 12 en déduit la consigne d'ouverture $\hat{O}$ du vannage 9. Toutefois, celle-ci n'est pas directement transmise à ce vannage du fait qu'une correction peut lui être appliquée en fonction principalement, comme on l'a vu en référence à fig. 1 de l'écart de fréquence $\Delta f$ existant entre la fréquence de référence et celle fournie par l'alternateur et aussi en fonction du coefficient bp qui est dans ce cas un statisme à l'ouverture.

L'information relative à l'écart de fréquence $\Delta f$ et celle donnée par le coefficient bp sont amenées dans le sommateur 5. Celui-ci les ajoute algébriquement en vue d'entrer une consigne dans le régulateur de vitesse 7 qui émet une information correctrice $\Delta \hat{O}$ de l'ouverture du voisinage. On notera que cette information est prise en sortie du régulateur 7 en vue d'être réintroduite à l'entrée de ce régulateur 7 par l'intermédiaire du coefficient de statisme bp semblable à celui de fig. 1.

L'écart $\Delta o$ est amené à un sommateur 14 en même temps que l'informateur $\hat{O}$ provenant du micro-processeur 12.

Le résultat de la somme algébrique de $\Delta \hat{O}$ et de $\hat{O}$ vient dans le comparateur 8 et la suite des opérations s'effectue de la même manière que celle décrite en référence à fig. 1.

On observe que la consigne amenée au régulateur de vitesse 7 est une expression :

$$\Delta f + bp \ \Delta P \quad \text{dans le cas de fig. 1 puisque bp}$$

affecte l'écart de puissance    P

et $\Delta f$ + bp $\Delta \hat{O}$ dans le cas de fig. 2 puisque bp affecte l'écart d'ouverture $\Delta \hat{O}$.

En régime établi, il va de soi que la consigne amenée au régulateur de vitesse doit être nulle. Autrement dit on a :

suivant fig. 1   $\Delta f$ + bp $\Delta P$ = o

suivant fig. 2   $\Delta f$ + bp $\Delta \hat{O}$ = o

Ainsi suivant l'invention on fait respecter une consigne de puissance, en maintenant la fréquence du réseau, donc de réguler la vitesse de rotation d'une turbine pour une hauteur de chute donnée en jouant sur l'ouverture du distributeur mais sans mesurer le débit.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

Revendications

1. Procédé de régulation de puissance des turbines hydrauliques, caractérisé en ce qu'il consiste à générer une consigne d'ouverture ($\hat{O}$) du vannage (9) au moyen d'un microprocesseur (12) auquel on applique d'une part un renseignement relatif à la hauteur de chute (H) et d'autre part une consigne de puissance (Po), puis à corriger la consigne d'ouverture ($\hat{O}$) en fonction de l'écart de fréquence ($\Delta f$).

2. Procédé suivant la revendication 1, caractérisé en ce qu'il consiste en outre :

- à faire amener dans un sommateur de consigne les valeurs de la consigne ($\hat{o}$) et de son correctif ($\Delta \hat{O}$) pour obtenir la consigne demandée ($\hat{O}_1$) ;

- à comparer la consigne réelle ($\hat{O}_1$) et l'ouverture réelle ($\hat{O}_R$) de la turbine ;

- à amplifier le signal résultant de la comparaison ;

- et à l'appliquer aux organes de réglage du débit de la turbine.

3. Procédé suivant la revendication 2, caractérisé en ce que le correctif d'ouverture ($\Delta \hat{O}$) est produit par un régulateur de vitesse à l'entrée duquel est appliquée la somme de l'écart de fréquence ($\Delta f$) et du produit dudit correctif d'ouverture ($\Delta \hat{O}$) par le coefficient de statisme (bp).

*Fig. 1*

*Fig. 2*

**Office européen des brevets**

# RAPPORT DE RECHERCHE EUROPEENNE

## DOCUMENTS CONSIDERES COMME PERTINENTS

| Catégorie | Citation du document avec indication. en cas de besoin des parties pertinentes | Revendication concernée | CLASSEMENT DE LA DEMANDE (Int Cl 4) |
|---|---|---|---|
| D,A | FR-A-2 542 817 (S. SATO et al.) * Figures 2,6,11,17 * | 1,2 | F 03 B 15/14 F 03 B 15/10 |
| A | IEE PROCEEDINGS-C, vol. 127, no. 6, novembre 1980, pages 360-369, Old Woking, Surrey, GB; D. FINDLAY et al.: "Microprocessor-based adaptive water-turbine governor" * Figure 2 * | 1-3 | |
| A | PATENTS ABSTRACTS OF JAPAN, vol. 8, no. 12 (M-269)[1449], 19 janvier 1984; & JP - A - 58 174 169 (MITSUBISHI DENKI K.K.) 13-10-1983 * Résumé * | 1-3 | |
| A | PATENTS ABSTRACTS OF JAPAN, vol. 8, no. 80 (M-289)[1517], 12 avril 1984; & JP - A - 58 222 981 (HITACHI SEISAKUSHO K.K.) 24-12-1983 * Résumé * | 1 | |
| A | PATENTS ABSTRACTS OF JAPAN, vol. 8, no. 148 (M-308)[1585], 11 juillet 1984; & JP - A - 59 46 373 (TOKYO SHIBAURA DENKI K.K.) 15-03-1984 * Résumé * | 1 | |

DOMAINES TECHNIQUES RECHERCHES (Int Cl 4)

F 03 B

Le present rapport de recherche a été établi pour toutes les revendications

| Lieu de la recherche | Date d'achevement de la recherche | Examinateur |
|---|---|---|
| LA HAYE | 21-08-1986 | THIBO F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82